# EUROPEAN PATENT SPECIFICATION

(11) **EP 3 766 922 B1**
(45) Date of publication and mention of the grant of the patent: **09.02.2022**
(21) Application number: 20186129.1
(22) Date of filing: 16.07.2020
(51) Int. Cl.: C08G 77/12, C08G 77/20, C08L 83/04, C09D 183/04, C09J 183/04

(54) **TRIALLYL CYANURATE-CONTAINING ADDITION-CURABLE SILICONE COMPOSITION AND A METHOD FOR PREPARING THE SAME**
TRIALLYLCYANURAT-HALTIGE ADDITIONSHÄRTBARE SILICONZUSAMMENSETZUNG UND VERFAHREN ZU IHRER HERSTELLUNG
COMPOSITION DE SILICONE DURCISSABLE PAR ADDITION CONTENANT DU CYANURATE DE TRIALLYLE ET SON PROCÉDÉ DE PRÉPARATION

(30) Priority: 17.07.2019 JP 2019131875
(43) Date of publication of application: 20.01.2021
(73) Proprietor: Shin-Etsu Chemical Co., Ltd., Tokyo 100-0004 (JP)
(72) Inventor: AKETA, Takashi, Annaka-shi, Gunma 379-0224 (JP)
(74) Representative: V.O.

(56) References cited:
- EP-A1- 1 233 014
- US-A- 4 487 906
- US-A- 5 010 137
- US-A- 5 616 632

## Description

### TECHNICAL FIELD

The present invention relates to a triallyl cyanurate-containing addition-curable silicone composition which gives an elastomeric product (silicone rubber product) after being cured, and a method for preparing the same.

### BACKGROUND OF THE INVENTION

Addition-curable silicone compositions cure promptly to exhibit adhesiveness to a base material such as a metal and a resin, and do not produce a by-product during curing. Therefore, they are widely used as adhesives. However, additives usually used, such as triallyl isocyanate (TAIC) which is commonly used in addition-curable silicone compositions, are not registered in FDA177. 2600, which is the standard for food containers. Accordingly, use of such additives in addition-curable silicone compositions for food containers is problematic. In addition, where an addition-curable silicone composition comprising some additives is stored at room temperature and then cured, delayed curing often occurs, resulting in insufficient curing.

Document US 4 487 906 A describes an addition-curable silicone composition comprising an organopolysiloxane end-capped by vinyl groups, an organopolysiloxane comprising at least 33% of -SiO(H)(Me)- units (DH) and less than 67% of -SiO(Me)2- units, a platinum-based hydrosilylation catalyst, 0.05 parts by weight of bis(2,4-dichlorobenzoyl) peroxide. The compositions may also contain an inhibitor system consisting of a compound suitable as complex lingand for platinum and an organic peroxide. The use of triallyl cyanurate allows to improve storage stability while lowering toxicity. In the process of preparing the composition, triallyl cyanurate (TAC) is added after the addition of components (a) to (d).

Document US 5 010 137 A describes an addition-curable silicone composition comprising an organopolysiloxane comprising vinyl groups, an organopolysiloxane comprising SiH groups, a platinum catalyst and triallyl cyanurate as crosslinking aid. Compositions are used for preparing hoses.

Document US 5 616 632 A describes a method for the preparation of adhesives made from an addition-curable silicone composition wherein the silicone composition exhibits improved shelf stability and quick cure properties. The compositions comprise an organopolysiloxane end-capped by vinyl groups, an organopolysiloxane comprising at least 62% of -SiO(H) (Me)- units (DH), (c) a platinum-based hydrosilylation catalyst, 0.2 parts by weight of triallyl isocyanurate (TAIC) and 20 parts of silica.

Finally, document EP 1 233 014 A describes silicone rubber compositions used for the preparation of molded articles such as sealants for food container. When the silicone rubber composition is cured by addition, the composition comprises an organopolysiloxane end-capped by vinyl groups, an organopolysiloxane comprising -SiO(H)(Me)- units (DH), a platinum-based hydrosilylation catalyst, together with an organoperoxide component. A list of suitable compounds to be used as crosslinking retardant comprises trially isocyanurate (TAIC) and acetylene alcohols.

### PRIOR ART LITERATURE

### Patent Literature

Patent Literature 1: Japanese Patent Application Laid-Open No.2005-68268
Patent Literature 2: Japanese Patent Application Laid-Open No.2015-108088

### SUMMARY OF THE INVENTION

### PROBLEMS TO BE SOLVED BY THE INVENTION

In view of the aforesaid circumstances, the purpose of the present invention is to provide an addition-curable silicone composition which is useful for food containers, which composition shows less-delayed curing and cures promptly. Delayed curing occurs often when an addition-curable silicone composition is cured after being stored at room temperature.

### MEANS TO SOLVE THE PROBLEMS

As a result of extensive research to solve the aforesaid problems, the present inventors have found that by incorporating triallyl cyanurate as an additive in an addition-curable silicone composition, a composition suitable for use in food containers, particularly as an adhesive for food containers, is provided. Further, it has been found that by controlling the timing at which triallyl cyanurate is added in the preparation of a triallyl cyanurate-containing addition-curable silicone composition, delay in curing is suppressed and the composition cures more quickly, thereby the present invention is provided.

That is, the present invention is an addition-curable silicone composition comprising
(A) a diorganopolysiloxane having at least two alkenyl groups each bonded to a silicon atom in the molecule in an amount of 100 parts by mass,
(B) an organohydrogenpolysiloxane having at least two hydrogen atoms each bonded to a silicon atom in the molecule in such an amount that the ratio of the number of the hydrogen atoms each bonded to a silicon atom in component (B) to the number of the alkenyl groups in component (A) is 0.1 to 5,
(C) platinum-group metal catalyst in an amount of 0.1 to 500 ppm of mass of the platinum-group metal, relative to the total mass of components (A) and (B),
(D) a curing control agent in an amount of 0.01 to 3 parts by mass, said curing control agent being selected from acetylenic alcohol compounds, including silane-modified acetylenic alcohols and siloxane-modified acetylenic alcohols,
(E) triallyl cyanurate in an amount of 0.001 to 3 parts by mass, and,
(F) reinforcing silica in an amount of 1 to 80 parts by mass.

A method for preparing the composition is also provided.

### EFFECTS OF THE INVENTION

A cured product of the addition-curable silicone composition of the present invention is useful as an adhesive or a packing for food containers. Further, according to the preparation method of the present invention, it is possible to suppress delay in curing of the addition-curable silicone composition containing triallyl cyanurate.

### EMBODIMENTS OF THE INVENTION

### Component (A)

Component (A) is a diorganopolysiloxane having at least two alkenyl groups each bonded to a silicon atom in the molecule. The alkenyl group may have 2 to 8 carbon atoms, such as a vinyl group, an allyl group, a butenyl group, a pentenyl group, a hexenyl group, and a heptenyl group, preferably a vinyl group. The position of the alkenyl group in component (A) is not particularly limited, and may be at a molecular chain terminal or in a side chain, preferably at a molecular chain terminal.

Organic groups, other than the alkenyl group, bonded to the silicon atoms of (A) diorganopolysiloxane may be substituted or unsubstituted monovalent hydrocarbon groups having 1 to 18 carbon atoms, preferably 1 to 12 carbon atoms, more preferably 1 to 10 carbon atoms, and particularly 1 to 7 carbon atoms, including alkyl groups, such as a methyl group, an ethyl group, a propyl group, a butyl group, a pentyl group, a hexyl group, and a heptyl group; aryl groups such as a phenyl group, a tolyl group, a xylyl group, and a naphthyl group; aralkyl groups such as a benzyl group, and a phenethyl group; and halogenated alkyl groups such as a chloromethyl group, a 3-chloropropyl group, and a 3,3,3-trifluoropropyl group. Among them, a methyl group and a phenyl group are particularly preferred. Component (A) may be linear, partially-branched linear, cyclic, or branched.

Component (A) preferably has a viscosity in the range of 100 to 500,000mPa·s at 25 degrees C, preferably in the range of 300 to 100,000mPa·s. These viscosity ranges are preferred in view of the physical properties of the resulting cured silicone rubber and the workability of the composition. The viscosity is determined by a rotary viscometer.

Examples of component (A) include dimethylsiloxane/ methyl vinylsiloxane copolymers wherein both terminals are capped with trimethylsiloxy group; methylvinylpolysiloxane wherein both terminals are capped with trimethylsiloxy group; dimethylsiloxane/methylvinylsiloxane/methylphenylsiloxane copolymer wherein both terminals are capped with trimethylsiloxy group; dimethylpolysiloxane wherein both terminals are capped with dimethylvinylsiloxy group; methylvinylpolysiloxane wherein both terminals are capped with dimethylvinylsiloxy group; dimethylsiloxane/methylvinylsiloxane copolymer wherein both terminals are capped with dimethylvinylsiloxy group; dimethylsiloxane/methylvinylsiloxane/methylphenylsiloxane copolymer wherein both terminals are capped with dimethylvinylsiloxy group; dimethylpolysiloxane wherein both terminals are capped with a trivinylsiloxy group; organopolysiloxane copolymers comprising siloxane unit R¹₃SiO_{0.5}, siloxane unit R¹₂R²SiO_{0.5}, siloxane unit R¹₂SiO, and siloxane unit SiO₂; organopolysiloxane copolymers comprising siloxane unit R¹₃SiO_{0.5}, siloxane unit R¹₂R²SiO_{0.5}, and siloxane unit SiO₂; organopolysiloxane copolymers comprising siloxane unit R¹₂R²SiO_{0.5}, siloxane unit R¹₂R²SiO and siloxane unit R¹₂SiO; organopolysiloxane copolymers comprising siloxane unit R¹R²SiO, siloxane unit R¹SiO_{1.5} or siloxane unit R²SiO_{1.5}; and mixtures comprising at least two of these . R¹ here is a monovalent hydrocarbon group other than an alkenyl group, preferably, a methyl group or a phenyl group. R² here is an alkenyl group, as described above, preferably a vinyl group. Component (A) may be used alone or in combination of two or more.

Component (A) may be accompanied by low molecular weight siloxane which has a degree of polymerization of 10 or less, does not have a functional group, that is, the low molecular weight siloxane does not cause a hydrosilylation addition reaction with the component (A) or with component (B). The content of the low-molecular siloxane is preferably 0 to 0.3% by mass, more preferably 0 to 0.2% by mass and, still more preferably, 0 to 0.1% by mass, based on the component (A). In other words, per 100 parts by mass of the component (A), preferably 0.3 parts by mass or less, more preferably 0.2 parts by mass or less and, still more preferably, 0.1% by mass or less, and may not be contained. When the content is equal to or lower than the upper limit, occurrence of haze in a cured product due to volatilization of the low molecular weight siloxane and any adverse effects on a part comprising the cured product may be avoided. When the component (A) is a combination of two or more kinds of the organopolysiloxanes, the content of the low molecular weight siloxane is calculated based on a whole mass of the component (A).

The aforesaid functional group denotes a group which is involved in the hydrosilylation addition reaction with component (A) or component (B) (alkenyl group and Si-H group) and a Si-OH group. Examples of the low molecular weight siloxane include diorganocyclopolysiloxanes having a cyclic structure represented by the following formula (1) 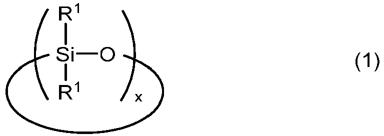 wherein x is an integer of 3 to 10, and R¹ is as described above.

The amount of the low-molecular siloxane accompanying component (A) may be reduced by evaporating it at 200 to 300 degrees C and 10 to 10,000 Pa, or by blowing an inert gas at a reduced pressure to promote vaporization.

### Component (B)

Component (B) is an organohydrogenpolysiloxane having at least 2, preferably at least 3, hydrogen atoms each bonded to a silicon atom (i.e., SiH group) in the molecule. Component (B) may be linear, branched, cyclic, or resinous in three-dimensional network. Preferably, the number of the silicon atoms of the hydrosilyl groups accounts for at least 70 % of a total number of the silicon atoms of component (B).

Examples of component (B) include organohydrogenpolysiloxanes represented by the following average compositional formula (2)

HₐR³_{b}SiO_{(4-a-b)/2} (2)

wherein R³ is, independently of each other, an unsubstituted or substituted, monovalent hydrocarbon group having 1 to 10 carbon atoms and does not comprise an alkenyl group, a and b satisfy the equations: 0<a<2, 0.8≦b≦2, and 0.8<a+b≦3, preferably, 0.05≦a≦1, 1.5≦b≦2 and 1.8≦a+b≦2.7.

The above-mentioned R³ may be selected from the organic groups, other than an alkenyl group, bonded to a silicon atom, as mentioned for component (A). Preference is given to monovalent hydrocarbon groups having 1 to 10 carbon atoms, in particular 1 to 7 carbon atoms, such as substituted or unsubstituted alkyl groups having 1 to 3 carbon atoms, such as a methyl groups, a 3,3,3-trifluoropropyl group and a phenyl group.

Examples of the organohydrogenpolysiloxane represented by the aforesaid formula (1) include cyclic methylhydrogenpolysiloxanes such as 1,1,3,3-tetramethyldisiloxane, 1,3,5,7-tetramethyltetracyclosiloxane, and 1,3,5,7,8-pentamethylpentacyclosiloxane; methylhydrogenpolysiloxane wherein both terminals are capped with a trimethylsiloxy group; dimethyl siloxane/methylhydrogensiloxane copolymers wherein both terminals are capped with a trimethylsiloxy group; methylhydrogenpolysiloxane wherein both terminals are capped with a silanol group; dimethylsiloxane/methylhydrogensiloxane copolymers wherein both terminals are capped with a silanol group; dimethylpolysiloxane wherein both terminals are capped with a dimethylhydrogensiloxy group; methylhydrogenpolysiloxanes wherein both terminals are capped with a dimethylhydrogensiloxy group; dimethylsiloxane/methylhydrogensiloxane copolymers wherein both terminals are capped with a dimethylhydrogensiloxy group; silicone resins comprising R⁴₂(H)SiO_{1/2} unit and SiO_{4/2} unit, optionally, R⁴₃SiO_{1/2} unit, R⁴₂SiO_{2/2} unit, R⁴(H)SiO_{2/2} unit, (H) SiO_{3/2} unit or R⁴SiO_{3/2} unit, wherein R⁴ is an unsubstituted or substituted monovalent hydrocarbon group, and may be those mentioned for R¹ above. Component (B) may be used alone or in combination of two or more of them.

The weight average molecular weight of component (B) is preferably 100 to 10,000, more preferably 200 to 5000. The weight average molecular weight may be determined by gel permeation chromatography (GPC) (solvent: toluene), reduced to a polystyrene.

Examples of component (B) include, preferably, organohydrogenpolysiloxanes represented by the following structural formulae. 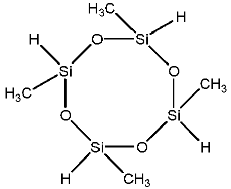 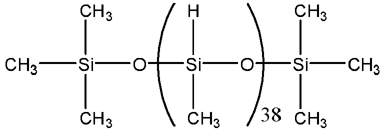 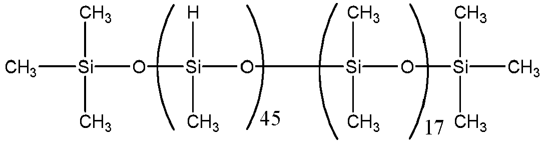 wherein the order of the siloxane units in parentheses is not limited, and may be at random or in blocks.

A method for preparing the aforesaid organohydrogenpolysiloxane is not particularly limited and may be any known method. For instance, at least one chlorosilane selected from R⁴(H)SiCl₂ and R⁴₂(H)SiCl is co-hydrolyzed, or a combination of such chlorosilane and at least one chlorosilane selected from R⁴₃SiCl and R⁴₂SiCl₂ is co-hydrolyzed, wherein R⁴ is as described above. The polysiloxanes obtained by cohydrolysis may be equilibrated.

The amount of component (B) is preferably from 0.1 part by mass to 20 parts by mass, more preferably from 0.5 part by mass to 5 parts by mass, per 100 parts by mass of component (A). Further, the amount is such that the ratio of the number of the hydrogen atoms each bonded to a silicon atom in component (B) to the number of the alkenyl groups in component (A) is 0.1 to 5, preferably 0.5 to 4.

### Component(C)

Component (C) is platinum-group metal catalyst, and promotes a hydrosilylation between the alkenyl group of component (A) and the SiH group of component (B).

Examples of component (C) include platinum group metals such as platinum (including platinum black), rhodium and palladium; platinum chloride, chloroplatinic acid and chloroplatinic acid salts, such as H₂PtCl₄•nH₂O, H₂PtCl₆•nH₂O, NaHPtCl₆•nH₂O, KHPtCl₆•nH₂O, Na₂PtCl₆•nH₂O, K₂PtCl₄•nH₂O, PtCl₄•nH₂O, PtCl₂, Na₂HPtCl₄•nH2O, where n is an integer of from 0 to 6, preferably 0 or 6; alcohol-modified chloroplatinic acid (see U.S. Patent No. 3,220,972); a complex of chloroplatinic acid and olefin (see U.S. Patent No. 3,159,601, U.S. Patent No. 3,159,662, and U.S. Patent No. 3,775,452); platinum group metal, such as platinum black and palladium, supported on a carrier, such as alumina, silica, carbon; a rhodium-olefin complex; chlorotris (triphenylphosphine) rhodium (Wilkinson catalyst); and complex of a platinum chloride, chloroplatinic acid or chloroplatinic acid salt with a vinyl group-containing siloxane. Component (C) may be used alone or in combination of two or more of them.

The amount of component (C) may be a catalytic amount, that is, an amount enough to promote the hydrosilylation of component (A) and component (B). The amount is usually 0.1 to 500 ppm, preferably 0.5 to 200 ppm of the platinum group metal, relative to the total mass of component (A) and component (B).

### Component (D)

Component (D) is a curing control agent for controlling the reactivity of the hydrosilylation catalyst to prevent thickening or gelation when the composition of the present invention is prepared in a single package or two packages, or before curing, for instance, when the composition is applied to a base material.

The curing control agent includes acetylene alcohol type compounds. Acetylene alcohol type compounds impart particularly excellent storage properties to the composition without impairing the curability of the present composition. Examples of the acetylene alcohol type compounds include acetylene alcohol, and silane-modified or siloxane-modified acetylene alcohol.

The acetylene alcohol is preferably such wherein an ethynyl group and a hydroxyl group are bonded to one and the same carbon atom, and particularly includes the following compounds. 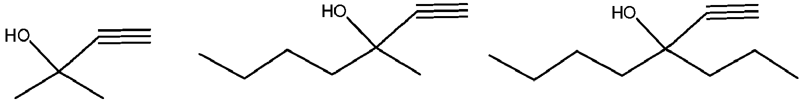 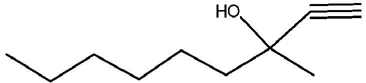 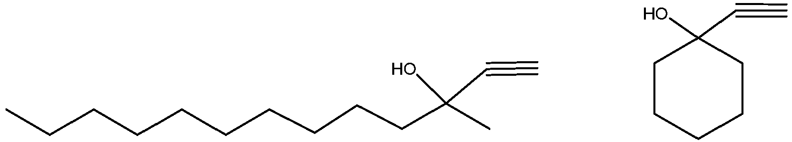 The silane-modified acetylene alcohol is a compound in which a hydroxyl group of the acetylene alcohol is silylated by, for example, an alkoxysilane or an alkoxysiloxane to form an Si-O-C bond. Examples of such include the following compounds. 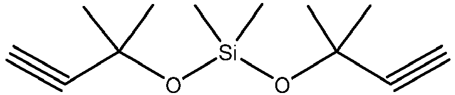 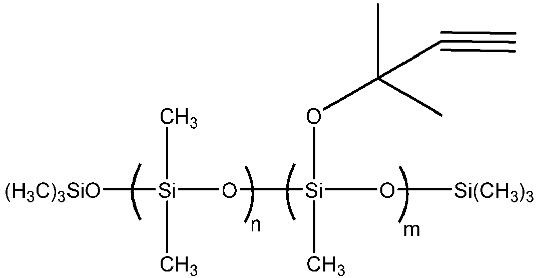 wherein n is an integer from 0 to 50, and m is an integer from 1 to 50, preferably from 3 to 50.

The amount of the component (D) is 0.01 to 3 parts by mass, preferably 0.02 to 0.5 parts by mass, per 100 parts by mass of the component (A).

### Component (E)

Component (E) is triallyl cyanurate and functions to impart adhesiveness to the addition-curable silicone composition of the present invention. Triallyl cyanurate is indicated in the following parts of the positive list published by the Food and Drug Administration of the United States of America.
PART 175.105 (Substances for Use Only as Components of Adhesives) PART 177.2600 (Rubber articles intended for repeated use)

The amount of triallyl cyanurate (E) is 0.001 to 3 parts by mass, preferably 0.01 to 0.5 parts by mass, per 100 parts by mass of the component (A).

### Component (F)

Component (F) is reinforcing silica, such as precipitated silica (or wet silica) and fumed silica (fumigant silica, or dry silica).

Precipitated silica preferably has a specific surface area of 100 m² or more per gram (for example, 100 to 300 m² per gram), more preferably 120 to 250 m² per gram, even more preferably 150 to 220 m² per gram, as determined according to the BET method. Then, rubber having high tear strength and high elongation is obtained. The precipitated silica preferably has a DBP (dibutyl phthalate) oil absorption of 100 to 250ml/100g, more preferably 150 to 220ml/100g. Then, sufficient rubber strength is attained, which is preferable. Fumed silica preferably has a specific surface area of 50 m² per gram or more, more preferably 100 m² or more per gram, more preferably 120 to 350 m² per gram, most preferably 150 to 320 m² per gram, as determined according to the BET method. Then, rubber having high tear strength and high elongation is obtained, which is preferable. The composition of the present invention may contain a combination of precipitated silica and fumed silica, or either one of these. The composition preferably contains fumed silica.

The above-mentioned reinforcing silica may be one which has been subjected to a surface hydrophobilization treatment with a surface treatment agent in advance. Alternatively, a surface treatment agent may be added during kneading of the organopolysiloxane of the component (A) and/or (B) to hydrophobilize the surface of the reinforcing silica. Examples of the surface treatment agent include alkylalkoxysilanes, alkylhydroxysilanes, alkylchlorosilanes, alkylsilazanes, silane coupling agents, a low molecular weight polysiloxane, titanate-based treatment agents, fatty acid esters, preferably alkyldisilazanes, more preferably hexamethyldisilazanes. One of the surface treatment agents may be incorporated, or two or more of these may be incorporated at the same time or at different times.

The amount of the surface treatment agent may preferably be 0.5 to 50 parts by mass, more preferably 1 to 40 parts by mass and, still more preferably, 2 to 30 parts by mass, per 100 parts by mass of the reinforcing silica. Then, the surface treatment agent or a decomposition product thereof does not remain in the bulk of the composition, good flowability is obtained, and the viscosity does not increase with time.

The amount of component (F) is 1 to 80 parts by mass, preferably 2 to 60 parts by mass, and more preferably 3 to 40 parts by mass, per 100 parts by mass of the component (A), from the viewpoint of handling of the composition and mechanical strength of the cured product.

### Other components

In addition to the aforesaid components (A) to (F), the addition-curable silicone composition of the present invention may contain other components as long as the purposes of the present invention are not impaired.

The other components include, for example, an epoxy or alkoxy group-containing organosilicon compound, an adhesion-imparting component such as a compound in which an ester group is bonded to a benzene ring, a reinforcing inorganic filler such as fumed titanium dioxide, a reinforcing silicone resin, and a non-reinforcing inorganic filler such as calcium silicate, titanium dioxide, ferric oxide, and carbon black.

The method for preparing the addition-curable silicone composition of the present invention will be explained in more detail.

Preferably, the aforesaid components (A) through (D) and (F) are mixed by any known method to obtain a mixture, to which the aforesaid component (E) is then added and mixed to prepare the addition-curable silicone composition of the present invention. By adding component (E) last, it is possible to suppress delayed curing. The delayed curing may occur when an addition-curable silicone composition is stored at room temperature and then cured. If component (E) is added at an earlier stage (e.g., mixed together with components (A) through (D)), delayed curing may occur. This is presumably because component (E) coordinates with a metal of the catalyst to act as a reaction inhibitor (catalyst poison).

The mixing may be done in any manner, using an apparatus capable of mixing and stirring the components and then defoaming at a reduced-pressure, for instance, a kneader, a pressure kneader, a twin-screw extruder, a planetary mixer with a reduced-pressure defoaming function.

That is, it is preferred to admix component (E) after mixing components (A) through (D) and (F). The following order of steps (i) to (v) is more preferred.
Step (i): to mix components (A) and (F) and, if necessary, a surface treatment agent to obtain a silicone rubber base
Step (ii): to add and mix components (C) and (D) to the silicone rubber base obtained in the aforesaid step (i)
Step (iii): to add and stir component (B) to the mixture obtained in step (ii)
Step (iv): to add and stir component (E) to the mixture obtained in step (iii), and
Step (v): to defoam the mixture obtained in step (iv) above at a reduced pressure to obtain the addition-curable silicone composition.

The mixing time in each of the aforesaid steps is not particularly limited and may be so as to be enough to mix the components uniformly, preferably 1 to 60 minutes. The temperature in the mixing is preferably an ordinary temperature of 5 degrees C to 35 degrees C. In the aforesaid step (i) of obtaining the silicone rubber base, the temperature may be 100 degrees C to 200 degrees C, if necessary. The decrease in pressure in the defoaming step (v) is preferably 0.08MPa or more.

Curing conditions of the addition-curable silicone composition of the present invention are not particularly limited, but are preferably 70 to 200 degrees C for 30 seconds to 60 minutes, particularly 90 to 130 degrees C for 1 minute to 30 minutes. The composition obtained by the preparation method of the present invention described above shows less delayed curing after being stored at room temperature, and cures rapidly.

The cured product has good adhesion on account of the incorporation of triallyl cyanurate. Accordingly, the cured product of the addition-curable silicone composition of the present invention may be used in various applications, for instance, as an adhesive for food containers, and as a packing. Triallyl cyanurate is registered in the Standards for Food Containers, as described above, and can be used safely in food containers.

### EXAMPLES

The present invention will be explained below in further detail with reference to a series of the Examples. The present invention is in no way limited by these Examples.

The components used in the following Examples are as follows. In the following chemical formulae, Me represents a methyl group, and Vi represents a vinyl group. The viscosity was determined at 25 degrees C by a rotary viscometer.
Component (A):
   (A-1) Organopolysiloxane (viscosity: 30,000mPa·s) represented by the following average compositional formula:

      Vi(Me)₂SiO-(Me₂SiO)₇₅₀-Si(Me)₂Vi
   (A-2) Organopolysiloxane (viscosity: 700mPa·s) represented by the following compositional average formula: 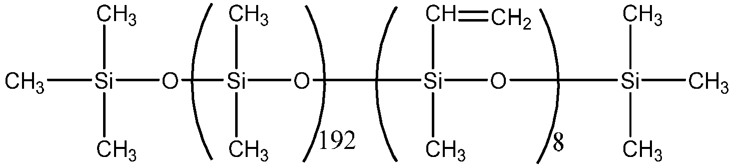
   wherein the order of the siloxane units is at random or in a block.
Component (B):
   (B-1) Organohydrogenpolysiloxane represented by the following compositional formula: 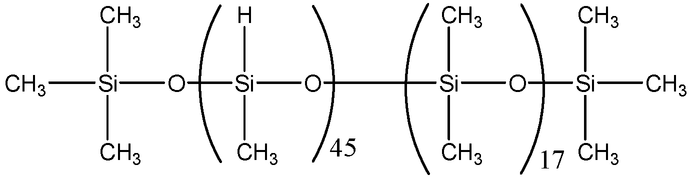 wherein the order of the siloxane units is at random or in a block.
   (B-2) Organohydrogenpolysiloxane represented by the following compositional formula: 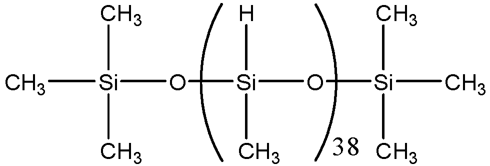
Component (C): solution of platinum-divinyltetramethyldisiloxane complex in toluene (platinum content: 1.0% by mass)
Component (D): ethynyl cyclohexanol
Component (E): triallyl cyanurate
Component (F): fumed silica (Aerosil 200, ex Aerosil Corporation, Japan, specific surface area: 200 m² per gram)

### EXAMPLES 1 to 6

The aforesaid components were blended in the amounts shown in Table 1, and subjected to the following steps (i) through (v) to prepare an addition-curable silicone composition.
Step (i): 91.5 parts by mass of component (A-1) and 5 parts by mass of component (F), 1 part by mass of hexamethyldisilazane, and 0.35 part by mass of water were mixed with a kneader at 25 degrees C, heated to 150 degrees C at atmospheric pressure, stirred for 3 hours, and cooled to 25 degrees C. Then, component (A-2) was added, and the mixture were mixed with stirring with a planetary mixer at 25 degrees C for 15 minutes to obtain a silicone rubber base.
Step (ii): Component (C) and then component (D) were added to the silicone rubber base obtained in step (i), and mixed with a planetary mixer at 25 degrees C for 15 minutes with stirring.
Step (iii): Component (B) was added to the mixture obtained in step (ii), and mixed with a planetary mixer at 25 degrees C for 15 minutes with stirring, and stirred at a reduced pressure for 30 minutes.
Step (iv): Component (E) was added to the mixture obtained in step (iii), and mixed with a planetary mixer at 25 degrees C for 15 minutes with stirring.
Step (v): The mixture obtained in step (iv) was defoamed at a reduced pressure at 25 degrees C for further 30 minutes to obtain an addition-curable silicone composition.

The content of low molecular weight siloxanes having a polymerization degree of 10 or less and no functional group in the addition-curable silicone compositions obtained in Examples 1 to 6 was 0.3% by mass or less, based on the total mass of the component (A-1) and the component (A-2.)

### EXAMPLE 7

The procedures of Example 1 were repeated, except that step (iv) was carried out between step (i) and step (ii) to obtain an addition-curable silicone composition.

### EXAMPLE 8

The procedures of Example 1 were repeated, except that step (iv) was carried out between step (ii) and step (iii) to obtain an addition-curable silicone composition.

**Table 1**

| | Example | | | | | | | |
|---|---|---|---|---|---|---|---|---|
| | 1 | 2 | 3 | 4 | 5 | 6 | 7 | 8 |
| (A-1) | 91.5 | 91.5 | 91.5 | 91.5 | 91.5 | 91.5 | 91.5 | 91.5 |
| (A-2) | 8.5 | 8.5 | 8.5 | 8.5 | 8.5 | 8.5 | 8.5 | 8.5 |
| (B-1) | 2 | 2 | 2 | | | | 2 | 2 |
| (B-2) | | | | 3 | 3 | 3 | | |
| (C) | 0.15 | 0.15 | 0.15 | 0.15 | 0.15 | 0.15 | 0.15 | 0.15 |
| (D) | 0.08 | 0.08 | 0.08 | 0.08 | 0.08 | 0.08 | 0.08 | 0.08 |
| (E) | 0.1 | 0.05 | 0.2 | 0.1 | 0.05 | 0.2 | 0.1 | 0.1 |
| (F) | 5 | 5 | 5 | 5 | 5 | 5 | 5 | 5 |
| [Si-H]/[Si-Vi]* | 3.6 | 3.8 | 3.1 | 3.6 | 3.9 | 3.2 | 3.6 | 3.6 |

| | | | | | | | | |
|---|---|---|---|---|---|---|---|---|
| ^{∗}The ratio of the number of hydrogen atom bonded to the silicon atom in the component (B) to the number of vinyl group in the component (A) | | | | | | | | |

For the compositions prepared in Examples 1-8, a curing rate at 125 degrees C was determined using a rheometer (RHEOMETER MDR 2000, ex Alpha Technologies Japan LLC) to obtain an induction time (T₁₀) on the compositions prepared in Examples 1-8, immediately after the preparation, and after being stored at room temperature (21-25 degrees C) for one week. The results are as shown in Table 2.

According to the BfR (Bundesinstitut fuer Roskobewertung), a cured product was heated at 200 degrees C for 4 hours, and a mass reduction ratio was determined for each of the compositions. The results are as shown in Table 2. A mass reduction ratio of 0.5% or less is preferred.

Each of the silicone compositions obtained in Examples 1 to 8 was applied on a clean surface of an aluminum plate and heated to cure in an oven at 120 degrees C for 60 minutes, and then cooled down to 25 degrees C. The adhesive property was evaluated as follows. After putting a cut at the interface between the aluminum plate and the cured silicone product with a razor blade, the cured silicone product was pulled to see if it would be peeled off from the aluminum plate by hand. When the cured silicone product was peeled off completely, the adhesion property was recorded as "peeled off". When the cured silicone product remained on the aluminum plate and was not peeled off, the adhesion property was recorded as "G", abbreviation for good adhesion. The results are as shown in Table 2.

**Table 2**

| | | Example | | | | | | | |
|---|---|---|---|---|---|---|---|---|---|
| | | 1 | 2 | 3 | 4 | 5 | 6 | 7 | 8 |
| Induction time T₁₀, second | Immediately after the preparation | 52 | 54 | 65 | 55 | 62 | 72 | 70 | 72 |
| | After stored at R.T. for one week | 45 | 50 | 63 | 54 | 61 | 70 | 82 | 90 |
| Mass reduction ratio according to BfR, % | | 0.2 | 0.3 | 0.3 | 0.2 | 0.3 | 0.2 | 0.2 | 0.3 |
| Adhesion property to an aluminu plate | | G | G | G | G | G | G | G | G |

As seen from Table 2, the addition-curable silicone composition of the present invention gives a cured product excellent in curability and adhesion to an aluminum plate and having a low mass reduction ratio.

To compare the curing rates of the addition-curable silicone compositions of Examples 1 to 6, where triallyl cyanurate (E) was added to the mixture of components (A) through (D), with the curing rates of the addition-curable silicone compositions of Examples 7 and 8, where triallyl cyanurate (E) was added at an earlier stage, the compositions of Examples 1 to 6 immediately after the preparation showed the shorter induction times (i.e., faster curing rates) than the compositions of Examples 7 and 8. Where stored at room temperature (21 to 25 degrees C) for 1 week, the compositions of Examples 1 to 6 showed a lower increase in the induction time, compared to the compositions of Examples 7 and 8, which means less delayed curing. Accordingly, a preferred embodiment of the method for preparing the addition-curable silicone composition of the present invention is to add component (E) to a mixture of the components (A) through (D), which makes it possible to suppress delayed curing of the composition so as to cure more quickly.

## Claims

1. An addition-curable silicone composition comprising
(A) a diorganopolysiloxane having at least two alkenyl groups each bonded to a silicon atom in the molecule in an amount of 100 parts by mass,
(B) an organohydrogenpolysiloxane having at least two hydrogen atoms each bonded to a silicon atom in the molecule in such an amount that the ratio of the number of the hydrogen atoms each bonded to a silicon atom in component (B) to the number of the alkenyl groups in component (A) is 0.1 to 5,
(C) platinum-group metal catalyst in an amount of 0.1 to 500 ppm of mass of the platinum-group metal, relative to the total mass of components (A) and (B),
(D) a curing control agent in an amount of 0.01 to 3 parts by mass, said curing control agent being selected from acetylenic alcohol compounds, including silane-modified acetylenic alcohols and siloxane-modified acetylenic alcohols,
(E) triallyl cyanurate in an amount of 0.001 to 3 parts by mass, and
(F) reinforcing silica in an amount of 1 to 80 parts by mass.

2. The addition-curable silicone composition according to claim 1, wherein reinforcing silica (F) is reinforcing silica surface-hydrophobilized with at least one selected from organosilane compounds and organosilazane compounds.

3. The addition-curable silicone composition according to claim 1 or 2, wherein component (B) has the hydrogen atoms each bonded to a silicon atom (hereinafter, referred to as hydrosilyl group) in such an amount that the number of silicon atoms of the hydrosilyl groups accounts for at least 70 % of the total number of all silicon atoms of component (B).

4. The addition-curable silicone composition according to any one of claims 1 to 3, wherein component (D) is selected from the group consisting of acetylenic alcohols wherein an ethynyl group and a hydroxyl group are bonded to one and the same carbon atom; and acetylenic alcohols wherein the hydroxyl group is silylated by an alkoxysilane or an alkoxysiloxane to form an Si-O-C bond.

5. The addition-curable silicone composition according to claim 4, wherein component (D) is selected from the group consisting of the following compounds: 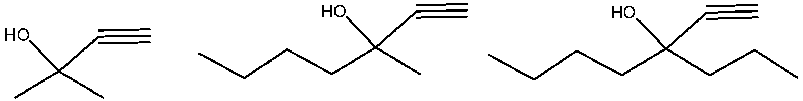 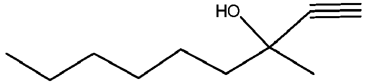 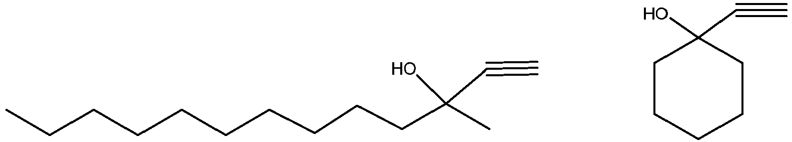 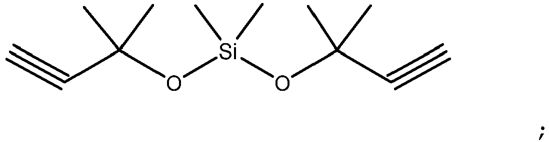 and 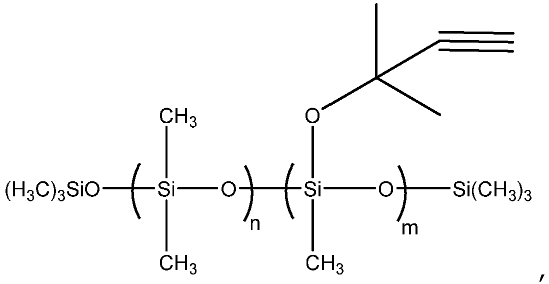 wherein n is an integer from 0 to 50, and m is an integer from 1 to 50.

6. An adhesive for a food container, comprising the addition-curable silicone composition according to any one of claims 1 to 3.

7. A food container comprising the cured product of the addition-curable silicone composition according to any one of claims 1 to 3.

8. A method for preparing the addition-curable silicone composition according to any one of claims 1 to 3, the method comprising steps of mixing components (A), (B), (C), (D) and (F) to obtain a mixture, and then adding component (E) to the mixture to obtain the addition-curable silicone composition.

## Patentansprüche

1. Additionshärtbare Siliziumzusammensetzung umfassend
(A) ein Diorganopolysiloxan mit wenigstens zwei Alkenylgruppen, jeweils gebunden an ein Siliziumatom in dem Molekül in einer Menge von 100 Masseteilen,
(B) ein Organohydrogenpolysiloxan mit wenigstens zwei Wasserstoffatomen jeweils gebunden an ein Siliziumatom in dem Molekül in einer solchen Menge, dass das Verhältnis der Zahl der Wasserstoffatome, jeweils gebunden an ein Siliziumatom in Bestandteil (B), zu der Zahl der Alkenylgruppen in Bestandteil (A) 0,1 bis 5 ist,
(C) Platin-Gruppe Metallkatalysator in einer Menge von 0,1 bis 500 ppm der Masse des Platin-Gruppe Metalls, bezogen auf die Gesamtmasse von Bestandteilen (A) und (B),
(D) ein Härtungskontrollmittel in einer Menge von 0,01 bis 3 Masseteilen, wobei das Härtungskontrollmittel ausgewählt ist aus acetylenischen Alkoholverbindungen, einschließlich Silan-modifizierten acetylenischen Alkoholen und Siloxan-modifizierten acetylenischen Alkoholen,
(E) Triallylcyanurat in einer Menge von 0,001 bis 3 Masseteilen, und
(F) verstärkendes Silica in einer Menge von 1 bis 80 Masseteilen.

2. Additionshärtbare Siliziumzusammensetzung nach Anspruch 1, wobei verstärkendes Silica (F) verstärkendes Silica oberflächenhydrophobiert mit wenigstens einem ausgewählt aus Organosilan-Verbindungen und Organosilazan-Verbindungen ist.

3. Additionshärtbare Siliziumzusammensetzung nach Anspruch 1 oder 2, wobei Bestandteil (B) die Wasserstoffatome jeweils gebunden an ein Siliziumatom (im Folgendem, bezeichnet als Hydrosilylgruppe) in solch einer Menge hat, dass die Zahl der Siliziumatome der Hydrosilylgruppen mindestens 70 % der Gesamtzahl aller Siliziumatome von Bestandteil (B) ausmachen.

4. Additionshärtbare Siliziumzusammensetzung nach einem der Ansprüche 1 bis 3, wobei Bestandteil (D) ausgewählt ist aus der Gruppe bestehend aus acetylenischen Alkoholen, wobei eine Ethynylgruppe und eine Hydroxylgruppe an ein und dasselbe Kohlenstoffatom gebunden sind; und acetylenischen Alkoholen, wobei die Hydroxylgruppe durch ein Alkoxysilan oder ein Alkoxysiloxan silyliert sind, um eine Si-O-C-Bindung zu bilden.

5. Additionshärtbare Siliziumzusammensetzung nach Anspruch 4, wobei Bestandteil (D) ausgewählt ist aus der Gruppe bestehend aus den folgenden Verbindungen: 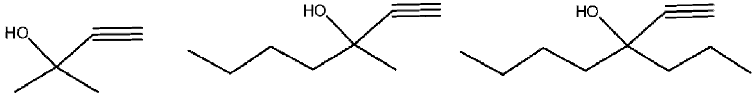 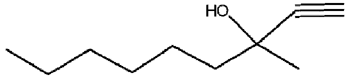 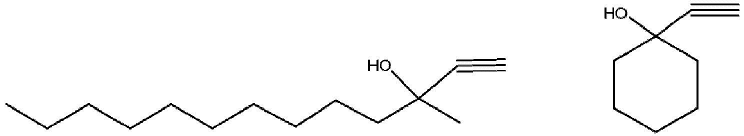 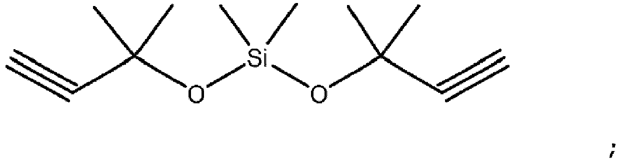 und 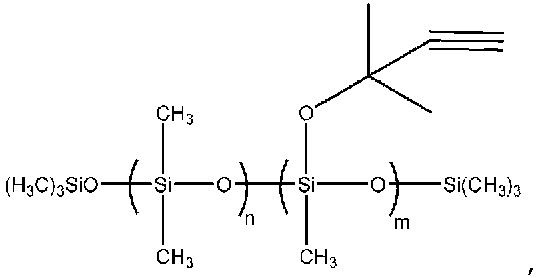 wobei n eine Ganzzahl von 0 bis 50 ist, und m eine Ganzzahl von 1 bis 50 ist.

6. Kleber für einen Nahrungsbehälter, umfassend die additionshärtbare Siliziumzusammensetzung nach einem der Ansprüche 1 bis 3.

7. Nahrungsbehälter, umfassend das gehärtete Produkt der additionshärtbaren Siliziumzusammensetzung nach einem der Ansprüche 1 bis 3.

8. Verfahren zum Herstellen der additionshärtbaren Siliziumzusammensetzung nach einem der Ansprüche 1 bis 3, das Verfahren umfassend Schritte von Mischen der Bestandteile (A), (B), (C), (D) und (F), um eine Mischung zu erhalten, und dann Hinzufügen von Bestandteil (E) zu der Mischung, um die additionshärtbare Siliziumzusammensetzung zu erhalten.

## Revendications

1. Composition de silicone durcissable par addition comprenant
(A) un diorganopolysiloxane ayant au moins deux groupes alcényle liés chacun à un atome de silicium dans la molécule dans une quantité de 100 parties en masse,
(B) un organohydrogénopolysiloxane ayant au moins deux atomes d'hydrogène liés chacun à un atome de silicium dans la molécule dans une quantité telle que le rapport du nombre des atomes d'hydrogène liés chacun à un atome de silicium dans le constituant (B) au nombre des groupe alcényle dans le constituant (A) est de 0,1 à 5,
(C) un catalyseur de métal du groupe du platine dans une quantité de 0,1 à 500 ppm en masse du métal du groupe du platine, par rapport à la masse totale des constituants (A) et (B),
(D) un agent de contrôle du durcissement dans une quantité de 0,01 à 3 parties en masse, ledit agent de contrôle du durcissement étant choisi parmi des composés d'alcools acétyléniques, incluant des alcools acétyléniques modifiés par un silane et des alcools acétyléniques modifiés par un siloxane,
(E) un cyanurate de triallyle dans une quantité de 0,001 à 3 parties en masse, et
(F) de la silice de renforcement dans une quantité de 1 à 80 parties en masse.

2. Composition de silicone durcissable par addition selon la revendication 1, où la silice de renforcement (F) est une silice de renforcement rendue hydrophobe en surface avec au moins un choisi parmi des composés d'organosilanes et composés d'organosilazanes.

3. Composition de silicone durcissable par addition selon la revendication 1 ou 2, où le constituant (B) présente les atomes d'hydrogène liés chacun à un atome de silicium (cités ci-après par groupe hydrosilyle) dans une quantité telle que le nombre des atomes de silicium aux groupes hydrosilyle compte pour au moins 70 % du nombre total de tous les atomes de silicium du constituant (B).

4. Composition de silicone durcissable par addition selon l'une quelconque des revendications 1 à 3, où le constituant (D) est choisi dans le groupe consistant en alcools acétyléniques où un groupe éthynyle et un groupe hydroxyle sont liés au même atome de carbone ; et alcools acétyléniques où le groupe hydroxyle est silylé par un alcoxysilane ou un alcoxysiloxane pour former une liaison Si-O-C.

5. Composition de silicone durcissable par addition selon la revendication 4, où le constituant (D) est choisi dans le groupe consistant en les composés suivants : 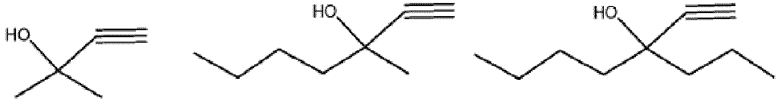 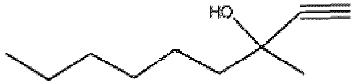 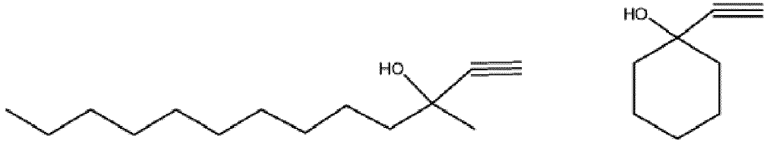 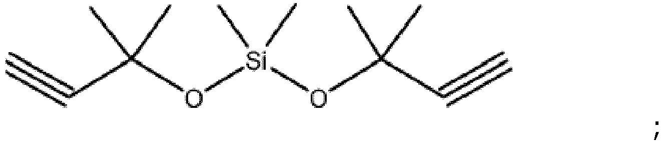 et 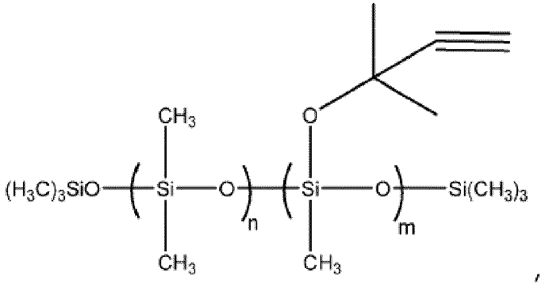 où n est un nombre entier de 0 à 50, et m est un nombre entier de 1 à 50.

6. Adhésif pour un récipient alimentaire, comprenant la composition de silicone durcissable par addition selon l'une quelconque des revendications 1 à 3.

7. Récipient alimentaire comprenant le produit durci de la composition de silicone durcissable par addition selon l'une quelconque des revendications 1 à 3.

8. Procédé pour la préparation de la composition de silicone durcissable par addition selon l'une quelconque des revendications 1 à 3, le procédé comprenant les étapes de mélange des constituants (A), (B), (C), (D) et (F) pour obtenir un mélange, et puis d'addition du constituant (E) au mélange pour obtenir la composition de silicone durcissable par addition.
